(19) Europäisches Patentamt
European Patent Office
Office européen des brevets

(11) **EP 3 391 072 B1**

(12) **FASCICULE DE BREVET EUROPEEN**

(45) Date de publication et mention
de la délivrance du brevet:
**30.10.2019  Bulletin 2019/44**

(51) Int Cl.:
***G01S 5/12*** *(2006.01)*   ***G01S 11/02*** *(2010.01)*
*G01S 5/02* *(2010.01)*

(21) Numéro de dépôt: **16823203.1**

(22) Date de dépôt: **15.12.2016**

(86) Numéro de dépôt international:
**PCT/EP2016/081272**

(87) Numéro de publication internationale:
**WO 2017/102994 (22.06.2017 Gazette 2017/25)**

(54) **PROCÉDÉ DE LOCALISATION DE SOURCES D'ÉMISSION D'IMPULSIONS ÉLECTROMAGNÉTIQUES**

VERFAHREN ZUR ORTUNG VON QUELLEN MIT EMISSION ELEKTROMAGNETISCHER IMPULSE

METHOD FOR LOCATING SOURCES EMITTING ELECTROMAGNETIC PULSES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.12.2015  FR 1502594**

(43) Date de publication de la demande:
**24.10.2018  Bulletin 2018/43**

(73) Titulaire: **THALES
92400 Courbevoie (FR)**

(72) Inventeurs:
• **JAHAN, Daniel
29200 Brest (FR)**
• **GIACOMETTI, Romain
29200 Brest (FR)**
• **CORNU, Cédric
29200 Brest (FR)**

(74) Mandataire: **Lavoix
2, place d'Estienne d'Orves
75441 Paris Cedex 09 (FR)**

(56) Documents cités:
**EP-A1- 2 428 810        WO-A1-2014/001651
US-A1- 2011 140 966**

**Description**

La présente invention concerne un procédé de localisation d'au moins deux sources d'émission d'impulsions électromagnétiques, le procédé comprenant les étapes de :

- réception, par un détecteur, pour chaque source à localiser, pendant une durée de fonctionnement du détecteur, d'au moins une même impulsion émise, reçue d'une part en direct et reçue d'autre part par réflexion sur la plate-forme porteuse d'une autre source,
- mesure de la direction d'arrivée, de la date d'arrivée et d'au moins une caractéristique invariante de chaque impulsion reçue.

La localisation d'une source consiste à déterminer la direction et la distance de la source par rapport à un point de référence. Une telle localisation est généralement basée sur un principe de multistatisme consistant à observer la source sous différents angles.

Pour localiser une source, une méthode connue, utilisant le principe de la triangulation, consiste à mesurer la direction d'arrivée des impulsions émises par la source au moyens de plusieurs détecteurs, délocalisés les uns des autres. La triangulation est une technique permettant de déterminer la position d'un point en mesurant les angles entre ce point et d'autres points de référence dont la position est connue.

Toutefois, une telle méthode impose d'utiliser un réseau de détecteurs et donc nécessairement un système de coordination des détecteurs du réseau, ce qui outre le coût lié au nombre de détecteurs, exclut la possibilité de travailler avec un unique détecteur.

Il a également été développé une méthode de localisation consistant à disposer un unique récepteur sur un porteur ayant une vitesse de défilement relativement élevée par rapport à la source à localiser. Un tel défilement relatif permet d'obtenir un ensemble de directions d'arrivée dans le temps, dont le point de concours est l'endroit où se situe la source.

Cependant, l'obtention d'un défilement relatif impose un porteur particulièrement véloce par rapport aux sources à localiser, ce qui rend la méthode inadaptée dans le cas d'une source en déplacement.

Une autre méthode connue repose sur la mesure des différences de temps de passage de lobe d'antenne (abrégé en DTPLA).

Néanmoins, de telles mesures supposent de connaître la vitesse de rotation du lobe d'antenne et donc d'effectuer des balayages circulaires, ce qui implique une acquisition relativement lente.

Il est également connu d'utiliser la différence de temps d'arrivée (abrégé en TDOA) d'un même signal arrivant en deux points de réception différents pour localiser une source. Une telle différence de temps permet de déterminer le lieu géométrique où se situe la source.

Toutefois, là encore au moins deux détecteurs sont requis, ce qui exclut la possibilité de travailler avec un seul détecteur.

Des méthodes combinant des mesures de TDOA et de DTPLA à partir d'un unique détecteur sont également connues.

En revanche, comme cela a été expliqué précédemment, les mesures de DTPLA exigent des balayages circulaires, ce qui est à la fois lent et incertain.

Les documents US 2011/0140966 A, EP 2 428 810 A et WO 2014/001651 A décrivent des exemples de procédés de localisation de sources.

Il existe donc un besoin pour un procédé de localisation de sources à partir d'un unique récepteur quasi-statique par rapport aux sources à localiser.

A cet effet, l'invention a pour objet un procédé de localisation du type précité, dans lequel le procédé comprend, en outre, les étapes de :

- regroupement d'au moins une première paire d'impulsions de caractéristiques invariantes égales à une première caractéristique invariante de directions d'arrivée différentes, et d'au moins une deuxième paire d'impulsions de caractéristiques invariantes égales à une deuxième caractéristique invariante et de mêmes directions d'arrivée différentes,
- calcul de la différence de dates d'arrivée entre les impulsions de chaque paire,
- détermination de la direction et de la distance de chaque source au détecteur à partir des différences de dates d'arrivée calculées et des directions d'arrivée des impulsions de chaque paire.

Suivant des modes de mise en œuvre particuliers, le procédé de localisation comprend une ou plusieurs des caractéristiques suivantes, prises isolément ou suivant toutes les combinaisons techniquement possibles :

- la durée de fonctionnement est formée de tranches de temps de durées identiques, le procédé comprenant la définition d'une durée glissante au moins égale à la durée d'une tranche de temps, l'étape de regroupement étant mise en œuvre sur la durée glissante, les impulsions de chaque paire appartenant à la même tranche de temps.

- le procédé comprend, en outre, pour chaque tranche de temps, une étape de tri des impulsions reçues en fonction de la direction d'arrivée et d'au moins une caractéristique invariante choisie parmi la ou les caractéristiques mesurées de chaque impulsion, pour obtenir des ensembles d'impulsions, les impulsions de chaque ensemble ayant des directions d'arrivée égales et des caractéristiques invariantes égales, les impulsions de chaque ensemble étant regroupées dans une même paire lors de l'étape de regroupement.

- l'étape de détermination comprend le calcul d'un histogramme, pour chaque paire, à partir des différences de dates d'arrivée calculées pour ladite paire et la détermination d'un retard principal à partir de l'histogramme calculé, la direction et la distance de chaque source au détecteur étant calculées à partir des retards principaux déterminés.

- l'étape de détermination comprend, en outre, la comparaison de la valeur de chaque retard principal par rapport à une plage de valeurs de référence et la comparaison du nombre d'occurrences relatif à chaque retard principal par rapport à un seuil de référence, l'étape de détermination comprenant, également, l'élimination des retards principaux dont la valeur n'est pas comprise dans la plage de valeurs de référence et dont le nombre d'occurrences est strictement inférieur au seuil de référence.

- chaque première paire et deuxième paire regroupées permet de déterminer les distances respectives de deux des sources à localiser au détecteur, lesdites distances étant calculées à partir des fonctions suivantes :

$$d_1 = \frac{c}{4}\left((\tau_{P1} - \tau_{P2}) + \sqrt{(\tau_{P1} - \tau_{P2})^2 + \frac{(8\tau_{P1}\tau_{P2})}{(1-\cos(\theta_1-\theta_2))}}\right)$$

$$d_2 = \frac{c}{4}\left(3(\tau_{P1} - \tau_{P2}) + \sqrt{(\tau_{P1} - \tau_{P2})^2 + \frac{(8\tau_{P1}\tau_{P2})}{(1-\cos(\theta_1-\theta_2))}}\right)$$

où

- $d_1$ est la distance de la première source $S_1$ au détecteur R,
- $d_2$ est la distance de la deuxième source $S_2$ au détecteur R,
- c est la vitesse de propagation des ondes,
- $\tau_{P1}$ est le premier retard principal relatif à la différence de trajet entre les impulsions réfléchies reçues et les impulsions directes reçues, issues des mêmes impulsions émises par la première source $S_1$,
- $\tau_{P2}$ est le deuxième retard principal relatif à la différence de trajet entre les impulsions réfléchies reçues et les impulsions directes reçues, issues des mêmes impulsions émises par la deuxième source $S_2$,
- $\theta_1$ est la direction d'arrivée des impulsions émises par la première source $S_1$, et
- $\theta_2$ est la direction d'arrivée des impulsions émises par la deuxième source $S_2$.

  - la direction de chaque source est la direction d'arrivée des impulsions d'un ensembles d'au moins une paire en avance par rapport aux impulsions de l'autre ensemble de la paire.
  - le procédé comprend, en outre, une étape de minimisation d'une fonction de coût.
  - les caractéristiques invariantes de chaque impulsion comprennent au moins l'une des caractéristiques parmi : la largeur de l'impulsion, la fréquence porteuse de l'impulsion et la modulation intra-impulsion intentionnelle.

L'invention concerne aussi un dispositif de localisation d'au moins deux sources d'émission d'impulsions électromagnétiques, le détecteur étant propre à mettre en œuvre les étapes du procédé tel que défini plus haut.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une vue schématique d'un exemple de sources à localiser et d'un détecteur destiné à localiser de telles sources,
- figure 2, une vue schématique et fonctionnelle du détecteur de la figure 1, et
- figure 3, un organigramme d'un exemple de mise en œuvre d'un procédé de localisation de sources.

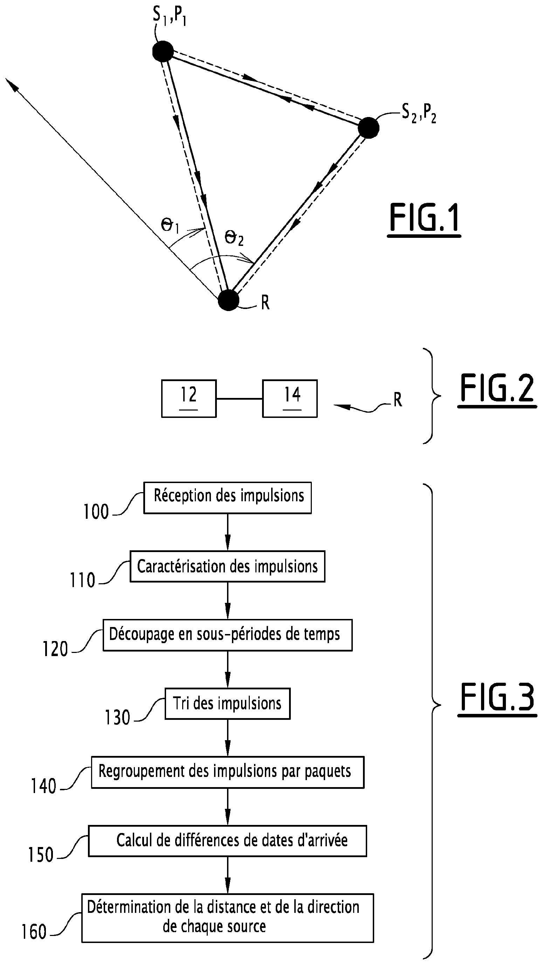

Un principe général de mise en œuvre de l'invention est décrit dans ce qui suit, sur la base de la figure 1.

Pour cela, deux sources d'émissions d'impulsions électromagnétiques ponctuelles $S_1$ et $S_2$, placées respectivement sur des plates-formes porteuses quasiment ponctuelles et réflectrices $P_1$ et $P_2$, sont considérées. Par l'expression « quasiment ponctuel », il est entendu que le point d'émission de chaque source d'émission $S_1$, $S_2$ est considéré confondu avec le point de réflexion de la plate-forme $P_1$, $P_2$ sur laquelle est placée ladite source $S_1$, $S_2$.

Les sources $S_1$ et $S_2$ sont, par exemple, des sources d'émission radar, c'est-à-dire des sources d'émission électromagnétiques modulées, et plus particulièrement modulées par impulsions. Les sources $S_1$,..., $S_n$ à localiser sont, par exemple, disposées en mer sur des navires délocalisés les uns des autres.

Un but de l'invention est de localiser lesdites sources $S_1$ et $S_2$ au moyen d'un unique détecteur de radars R placé à distance des sources $S_1$ et $S_2$, comme cela est illustré par la figure 1. Par l'expression « localiser une source », il est entendu déterminer la direction et la distance de la source au détecteur.

Le détecteur de radars R perçoit le signal $x_1$ correspondant à l'impulsion émise par la première source $S_1$ en direct, c'est-à-dire après avoir parcouru le chemin $S_1 R$. Ce signal est caractérisé par des caractéristiques $a_1$, une date d'arrivée $t_1$ et une direction d'arrivée $\theta_1$ mesurées par le détecteur R.

Le détecteur de radars R perçoit également le signal $x_{12}$ correspondant à la même impulsion émise par la première source $S_1$ et réfléchie sur la plate-forme $P_2$ de la deuxième source $S_2$, c'est-à-dire après avoir parcouru le chemin $S_1 S_2 + S_2 R$. Ce signal est caractérisé par des caractéristiques $a_{12}$, une date d'arrivée $t_{12}$ et une direction d'arrivée $\theta_2$ mesurées par le détecteur R.

Le détecteur de radars R perçoit également le signal $x_2$ correspondant à l'impulsion émise par la deuxième source $S_2$ en direct, c'est-à-dire après avoir parcouru le chemin $S_2 R$. Ce signal est caractérisé par des caractéristiques $a_2$, une date d'arrivée $t_2$ et une direction d'arrivée $\theta_2$ mesurées par le détecteur R.

Le détecteur de radars R perçoit également le signal $x_{21}$ correspondant à la même impulsion émise par la deuxième source $S_2$ et réfléchie sur la plate-forme $P_1$ de la première source $S_1$, c'est-à-dire après avoir parcouru le chemin $S_2 S_1 + S_1 R$. Ce signal est caractérisé par des caractéristiques $a_{21}$, une date d'arrivée $t_{21}$ et une direction d'arrivée $\theta_1$ mesurées par le détecteur R.

Le détecteur de radars R perçoit donc les quatre signaux suivants : $x_1(a_1,\theta_1,t_1)$, $x_{12}(a_{12},\theta_2,t_{12})$, $x_2(a_2,\theta_2,t_2)$ et $x_{21}(a_{21},\theta_1,t_{21})$.

Des signaux $x_1(a_1,\theta_1,t_1)$ et $x_{12}(a_{12},\theta_2,t_{12})$, il est déduit la différence de temps d'arrivée $\tau_1$ des impulsions relatives à la première source $S_1$, à partir des deux mesures de dates d'arrivée $t_1$ et $t_{12}$, soit donc $\tau_1 = t_{12} - t_1$. La différence de temps d'arrivée $\tau_1$ correspond au parcours $S_1 S_2 + S_2 R - S_1 R$.

Des signaux $x_2(a_2,\theta_2,t_2)$ et $x_{21}(a_{21},\theta_1,t_{21})$, il est déduit la différence de temps d'arrivée $\tau_2$ des impulsions relatives à la deuxième source $S_2$, à partir des deux mesures de dates d'arrivée $t_2$ et $t_{21}$, soit donc $\tau_2 = t_{21} - t_2$. La différence de temps d'arrivée $\tau_2$ correspond au parcours $S_2 S_1 + S_1 R - S_2 R$.

L'application du théorème du cosinus au triangle $S_1 R S_2$ permet d'écrire l'équation suivante :

$$d_{12}{}^2 = d_1{}^2 + d_2{}^2 - 2 d_1 d_2 \cos(\theta_1 - \theta_2) \qquad (1)$$

Où

- $d_1$ est la distance entre la première source $S_1$ et le détecteur R,
- $d_2$ est la distance entre la deuxième source $S_2$ et le détecteur R, et
- $d_{12}$ est la distance entre la première source $S_1$ et la deuxième source $S_2$.

A partir des différences de temps d'arrivée $\tau_1$ et $\tau_2$ et en considérant que c est la vitesse de propagation des ondes, les équations (2) et (3) suivantes sont obtenues :

$$c\tau_1 = d_{12} + d_2 - d_1 \qquad (2)$$

$$c\tau_2 = d_{12} + d_1 - d_2 \qquad (3)$$

En additionnant et en retranchant, les deux équations (2) et (3), les expressions (4) et (5) suivantes sont obtenues :

$$d_{12} = c\frac{\tau_1 + \tau_2}{2} \qquad\qquad (4)$$

$$d_2 = d_1 + c\frac{\tau_1 - \tau_2}{2} \qquad\qquad (5)$$

En introduisant les expressions (4) et (5) dans l'équation (1) issue du théorème du cosinus, l'équation (6) suivante est obtenue :

$$\left(c\frac{\tau_1 + \tau_2}{2}\right)^2 = d_1{}^2 + \left(d_1 + c\frac{\tau_1 - \tau_2}{2}\right)^2 - 2d_1\left(d_1 + c\frac{\tau_1 - \tau_2}{2}\right)\cos(\theta_1 - \theta_2) \qquad\qquad (6)$$

En réordonnant l'équation (6), une équation (7) du second degré en $d_1$ est obtenue :

$$2d_1{}^2 + c(\tau_1 - \tau_2)d_1 - \frac{c^2\tau_1\tau_2}{(1 - \cos(\theta_1 - \theta_2))} = 0 \qquad\qquad (7)$$

Le discriminant de l'équation (7) étant toujours positif, l'équation (7) a deux racines réelles distinctes (8) :

$$d_1 = \frac{c}{4}\left((\tau_1 - \tau_2) \pm \sqrt{(\tau_1 - \tau_2)^2 + \frac{8\tau_1\tau_2}{(1 - \cos(\theta_1 - \theta_2))}}\right) \qquad\qquad (8)$$

Etant donné que $(\tau_1 - \tau_2)^2 + \frac{8\tau_1\tau_2}{(1 - \cos(\theta_1 - \theta_2))} > (\tau_1 - \tau_2)^2$, il n'y a qu'une seule racine positive donnée par l'expression (9) suivante et correspondant à la distance entre la première source $S_1$ et le détecteur R :

$$d_1 = \frac{c}{4}\left((\tau_1 - \tau_2) + \sqrt{(\tau_1 - \tau_2)^2 + \frac{8\tau_1\tau_2}{(1 - \cos(\theta_1 - \theta_2))}}\right) \qquad\qquad (9)$$

En introduisant l'expression (9), dans l'expression (5), la distance entre la deuxième source $S_2$ et le détecteur R est obtenue :

$$d_2 = \frac{c}{4}\left(3(\tau_1 - \tau_2) + \sqrt{(\tau_1 - \tau_2)^2 + \frac{8\tau_1\tau_2}{(1 - \cos(\theta_1 - \theta_2))}}\right) \qquad\qquad (10)$$

Ainsi, les sources $S_1$ et $S_2$ ont bien été localisées en coordonnées polaires, respectivement $(d_1,\theta_1)$ et $(d_2,\theta_2)$.
Ce principe est généralisable à un système comprenant N sources d'émissions ponctuelles $S_1,...,S_N$ placées respectivement sur des plates-formes quasiment ponctuelles et réflectrices $P_1,...,P_N$. Un tel ensemble se décompose en $C_N^2 = \frac{N!}{2(N-2)!}$ triangles $S_iRS_j$ différents.
Une première méthode consiste à traiter chaque triangle $S_iRS_j$ séparément. Une telle première méthode aboutit au calcul de $C_N^2$ couples de distances $(d_i,d_j)$ avec i = 1 à N et j = 1 à N toujours supérieur à i. Cette méthode donne N - 1 estimations de $d_i$.
Une seconde méthode consiste en la minimisation d'une fonction de coût au niveau global, c'est-à-dire en prenant en compte simultanément l'ensemble des variables. Pour assurer une convergence plus rapide de cette seconde méthode itérative, celle-ci peut être initialisée avec des valeurs obtenues grâce à la première méthode.
Le détecteur R de localisation de sources $S_1,..., S_n$ d'émission d'impulsions électromagnétiques, fonctionnant sur le principe décrit précédemment, est illustré de manière fonctionnelle par la figure 2.
Le détecteur R est un détecteur de radars.
Le détecteur R est quasi-statique par rapport aux sources $S_1,..., S_n$ à localiser, c'est-à-dire que le détecteur R a au plus une vitesse relativement faible par rapport aux sources $S_1,..., S_n$ à localiser, de sorte que les évolutions géométriques, relatives aux triangles première source - deuxième source - détecteur, soient suffisamment inférieures à la précision recherchée pour ne pas l'affecter.

Le détecteur R comprend un module de réception 12 et un calculateur 14.

Le module de réception 12 comprend un réseau d'antennes de goniométrie formant un unique détecteur considéré comme ponctuel, un ensemble de chaînes de réception associées au réseau d'antennes et des fonctions de traitement permettant de mesurer des caractéristiques des impulsions reçues.

Les caractéristiques des impulsions mesurées par le module de réception 12 sont, par exemple, la direction d'arrivée des impulsions, la fréquence porteuse des impulsions, la largeur des impulsions, la date d'arrivée des impulsions, la modulation intra-impulsion intentionnelle (en anglais *intentional modulation on pulse*) ou encore la puissance des impulsions.

Le calculateur 14 est en interaction avec le module de réception 12.

Le calculateur 14 comprend, par exemple, un processeur, une mémoire et une unité de traitement de données. L'unité de traitement de données est configurée pour mettre en œuvre en interaction avec un produit programme d'ordinateur, chargeable dans l'unité de traitement de données, un procédé de localisation qui sera décrit plus en détails dans la suite de la description.

Un exemple de fonctionnement du détecteur R est maintenant décrit en référence à la figure 3, qui illustre schématiquement un ordinogramme de mise en œuvre d'un procédé de localisation de sources $S_1,..., S_n$ d'émission d'impulsions électromagnétiques.

Dans la suite de la description, le terme « égal » désigne « égal à une tolérance près ». La tolérance choisie est liée aux précisions de mesure, au rapport signal-à-bruit de mesure et à la fréquence des signaux reçus sur le détecteur R. La tolérance choisie est, par exemple, $\pm$ 5 pourcents (%).

Pour chaque source $S_1,..., S_n$ à localiser, le procédé de détermination comprend initialement une étape 100 de réception par le détecteur R d'au moins une impulsion émise, d'une part reçue en direct, c'est-à-dire selon le trajet allant directement de la source au détecteur, et d'autre part reçue sous sa forme réfléchie, c'est-à-dire après réflexion sur la plate-forme d'une autre source. Seules la différence de trajets géométriques, qui entraîne des dates d'arrivée différentes, et la qualité de la réflexion permet de différencier l'impulsion reçue en direct de l'impulsion reçue en réfléchi lorsque ces impulsions reçues sont issues de la même émission.

Les impulsions sont reçues par le détecteur R pendant la durée de fonctionnement du détecteur R.

En particulier, lorsque deux sources seulement sont à localiser, comme illustré par la figure 1, le détecteur R reçoit une première salve d'impulsions, en traits pointillés, émise directement par la première source $S_1$, une deuxième salve d'impulsions en traits pleins émise directement par la deuxième source $S_2$, une troisième salve d'impulsions en traits pointillés émise par la première source $S_1$ et réfléchie sur la plate-forme $P_2$ de la deuxième source $S_2$ et une quatrième salve d'impulsions en traits pleins émise par la deuxième source $S_2$ et réfléchie sur la plate-forme $P_1$ de la première source $S_1$.

Ensuite, le procédé de localisation comprend une étape 110 de mesure, par le détecteur R, de la direction d'arrivée $\theta_1,..., \theta_n$, de la date d'arrivée $t_1,..., t_n$ sur le détecteur R et d'au moins une caractéristique invariante $C_1,..., C_n$ de chaque impulsion reçue.

Les caractéristiques invariantes $C_1,..., C_n$ de chaque impulsion comprennent au moins l'une des caractéristiques parmi : la largeur de l'impulsion, la fréquence porteuse de l'impulsion et la modulation intra-impulsion intentionnelle.

Le procédé de localisation comprend, ensuite, une étape 120 de découpage de la durée de fonctionnement en tranches de temps $\Delta t_1,..., \Delta t_k$ de même durée.

La durée de chaque tranche de temps $\Delta t_1,..., \Delta t_k$ est liée à la durée maximale d'illumination à 3dB des radars. Par exemple, la durée de chaque tranche de temps est comprise entre 10 millisecondes (ms) et 100 ms.

Le procédé de localisation comprend, avantageusement, pour chaque tranche de temps $\Delta t_1,..., \Delta t_k$, une étape 130 de tri des impulsions reçues pendant la tranche de temps $\Delta t_1,..., \Delta t_k$, en fonction de la direction d'arrivée $\theta_1,..., \theta_n$ et d'au moins une caractéristique invariante $C_1,..., C_n$ choisie parmi la ou les caractéristiques mesurées de chaque impulsion. A l'issue de l'étape 130 de tri, des ensembles E d'impulsions sont obtenus.

Les impulsions de chaque ensemble E ont des directions d'arrivée $\theta_1,..., \theta_n$ égales et des caractéristiques invariantes $C_1,..., C_n$ égales. De ce fait, chaque ensemble E est caractérisé par une tranche de temps $\Delta t_1,..., \Delta t_k$, une direction d'arrivée $\theta_1,..., \theta_n$ et au moins une caractéristique invariante $C_1,..., C_n$.

Le procédé de localisation comprend, ensuite, une étape 140 de regroupement des ensembles E, sur une durée glissante $T_G$, par paquets P de quatre ensembles $E_1(C_1,\theta_1,\Delta t_{l1})$, $E_2(C_1,\theta_2,\Delta t_{l1})$, $E_3(C_2,\theta_1,\Delta t_{l2})$, $E_4(C_2,\theta_2,\Delta t_{l2})$ correspondant à une première et à une deuxième direction d'arrivée $\theta_1$, $\theta_2$ de valeurs différentes l'une de l'autre, à une première et à une deuxième caractéristique invariante $C_1$, $C_2$ de valeurs différentes l'une de l'autre et à au plus deux tranches de temps $\Delta t_{l1}$, $\Delta t_{l2}$. La durée glissante $T_G$ est au moins égale à la durée d'une tranche de temps.

Plus précisément, chaque paquet P comprend une première paire d'ensembles $E_1(C_1,\theta_1, \Delta t_{l1})$ et $E_2(C_1,\theta_2, \Delta t_{l1})$ de caractéristiques invariantes égales à la première caractéristique invariante $C_1$ du paquet P, de directions d'arrivée

$\theta_1$, $\theta_2$ différentes et appartenant à la même tranche de temps $\Delta t_{l1}$, et une deuxième paire d'ensembles $E_3(C_2,\theta_1, \Delta t_{l2})$ et $E_4(C_2,\theta_2, \Delta t_{l2})$ de caractéristiques invariantes égales à la deuxième caractéristique invariante $C_2$ du paquet P, de directions d'arrivée $\theta_1$, $\theta_2$ différentes et appartenant à la même tranche de temps $\Delta t_{l2}$.

Chaque paire d'ensembles ($E_1(C_1,\theta_1,\Delta t_{l1})$, $E_2(C_1,\theta_2,\Delta t_{l1})$) et ($E_3(C_2,\theta_1,\Delta t_{l2})$, $E_4(C_2,\theta_2, \Delta t_{l2})$) regroupe les impulsions reçues en direct et en réfléchi par le détecteur R et issues de la même émission.

La durée glissante $T_G$ est une fenêtre glissante d'analyse. Il s'agit de prendre en compte les impulsions reçues, ayant déjà fait l'objet de tri par tranches de temps $\Delta t_1,...$, $\Delta t_k$, sur une durée telle qu'on puisse détecter des impulsions directes et des impulsions réfléchies. En effet, le rayonnement des sources étant directif, il se doit de balayer l'espace pour le couvrir. Des conditions d'illumination sont alors nécessaires pour arriver à détecter une même impulsion émise reçue en direct et reçue en réfléchi.

De ce fait, la durée glissante $T_G$ est une durée au moins égale à la plus grande des périodes de balayage d'antennes des sources à localiser. Cela permet de s'assurer d'obtenir l'illumination des réflecteurs dans le laps de temps considéré. La durée glissante $T_G$ correspond donc à un grand nombre de tranche de temps $\Delta t_1,...$, $\Delta t_k$.

La durée glissante $T_G$ est, par exemple, comprise entre 1 seconde (s) et 10 secondes.

En variante, la durée glissante $T_G$ correspond à plusieurs passages de lobes d'antennes, c'est-à-dire à plusieurs périodes de balayage d'antennes des sources à localiser. Cela permet de travailler sur plus d'impulsions pour consolider les mesures, sous réserve que cet allongement du temps d'analyse ne corresponde pas une évolution trop grande de la géométrie au regard des précisions visées.

Puis, le procédé comprend, une étape 150 de calcul, pour chaque paire de chaque paquet P, des différences de dates d'arrivée entre les impulsions de l'un des ensembles E de la paire et les impulsions de l'autre ensemble E de la paire. De telles différences de dates d'arrivée résultent des différences de trajets géométriques entre les impulsions directes reçues et les impulsions réfléchies reçues issues des mêmes impulsions émises.

Le procédé comprend, ensuite, une étape 160 de détermination de la direction $\Theta$ et de la distance d de chaque source $S_1,...$, $S_n$ au détecteur R à partir des différences de dates d'arrivée calculées.

En particulier, l'étape de détermination 160 comprend une première phase de calcul d'un histogramme, pour chaque paire, à partir des différences de dates d'arrivée calculées.

Chaque histogramme permet de déterminer un retard principal $\tau_P$.

Par exemple, lorsque la période de répétition des impulsions (PRI) des signaux reçus sur le détecteur R est strictement supérieure au double d'une valeur de retard attendue, le retard principal $\tau_P$ est la différence de date d'arrivée la plus petite parmi les différences de dates d'arrivée de l'histogramme. La période de répétition des impulsions désigne la durée entre deux impulsions successives d'un même signal. La valeur de retard attendue est une valeur estimée en fonction de la configuration géométrique attendue des triangles première source - deuxième source - détecteur.

Dans un autre exemple, lorsque la période de répétition des impulsions des signaux reçus sur le détecteur R est inférieure ou égale au double de la valeur de retard attendue, l'étape de détermination 160 comprend l'identification des impulsions reçues en direct d'une part et des impulsions reçues après réflexion sur la plate-forme d'une autre source d'émission d'autre part. Les différences de date d'arrivée sont, ensuite, calculées uniquement entre les impulsions reçues en réfléchi par rapport aux impulsions reçues en direct et non pas entre les impulsions reçues en direct par rapport aux impulsions reçues en réfléchi. Le retard principal $\tau_P$ est alors la différence de date d'arrivée la plus petite parmi les différences de dates d'arrivée calculées entre les impulsions reçues en réfléchi par rapport aux impulsions reçues en direct.

De préférence, l'étape de détermination 160 comprend, ensuite, une deuxième phase de comparaison des valeurs de chaque retard principal $\tau_P$ déterminé par rapport à une plage de valeurs de référence. La plage de valeurs de référence est, par exemple, choisie en fonction de considérations géométriques, liées aux directions d'arrivée et à des hypothèses plausibles de distances dans les gammes d'intérêts. La plage de valeurs de référence s'étend, par exemple, au sens large entre 1 microseconde ($\mu$s) et 100 $\mu$s.

Avantageusement, la deuxième phase comprend également la comparaison du nombre d'occurrences relatif à chaque retard principal $\tau_P$ déterminé par rapport à un seuil de référence. Le seuil de référence est, par exemple, choisi en fonction d'un pourcentage du nombre d'impulsions directes reçues pour chaque paire.

Au cours de la deuxième phase, les retards principaux $\tau_P$ dont les valeurs ne sont pas comprises dans la plage de valeurs de référence et dont le nombre d'occurrences est strictement inférieur au seuil de référence, sont éliminés.

La deuxième phase permet donc de s'affranchir de valeurs aberrantes lorsque le retard principal $\tau_P$ obtenu est en dehors de la plage de valeurs plausibles et des valeurs isolées et non significatives lorsque le nombre d'occurrences est au-dessous du seuil de référence.

Puis, l'étape de détermination 160 comprend une troisième phase de détermination de la direction $\Theta$ de la source correspondant à chaque paire.

La direction de la source $S_1$, $S_2$ de chaque paire est la direction d'arrivée $\theta_1$, $\theta_2$ des impulsions des ensembles E de la paire en avance par rapport aux impulsions de l'autre ensemble E de la paire. La direction d'arrivée $\Theta$ correspondante est donc l'angle de l'émission directe des impulsions.

L'étape de détermination 160 comprend, également, une quatrième phase de calcul de la distance d entre le détecteur R et chacune de la première et de la deuxième source $S_1$, $S_2$ correspondant aux deux paires de chaque paquet P. Pour cela les fonctions (11) et (12) suivantes, déduites des expressions (9) et (10) sont, par exemple, utilisées :

$$d_1 = \frac{c}{4}\left((\tau_{P1} - \tau_{P2}) + \sqrt{(\tau_{P1} - \tau_{P2})^2 + \frac{(8\tau_{P1}\tau_{P2})}{(1-\cos(\theta_1-\theta_2))}}\right) \qquad (11)$$

$$d_2 = \frac{c}{4}\left(3(\tau_{P1} - \tau_{P2}) + \sqrt{(\tau_{P1} - \tau_{P2})^2 + \frac{(8\tau_{P1}\tau_{P2})}{(1-\cos(\theta_1-\theta_2))}}\right) \qquad (12)$$

où

- $d_1$ est la distance de la première source $S_1$ au détecteur R,
- $d_2$ est la distance de la deuxième source $S_2$ au détecteur R,
- c est la vitesse de propagation des ondes,
- $\tau_{P1}$ est le premier retard principal relatif à la différence de trajet entre les impulsions réfléchies reçues et les impulsions directes reçues, issues des mêmes impulsions émises par la première source $S_1$,
- $\tau_{P2}$ est le deuxième retard principal relatif à la différence de trajet entre les impulsions réfléchies reçues et les impulsions directes reçues, issues des mêmes impulsions émises par la deuxième source $S_2$,
- $\theta_1$ est la direction d'arrivée des impulsions émises par la première source $S_1$, et
- $\theta_2$ est la direction d'arrivée des impulsions émises par la deuxième source $S_2$.

Ainsi, chaque source $S_1$,..., $S_n$ est localisée en coordonnées polaires (d, $\Theta$).

Le procédé décrit permet donc la localisation de sources $S_1$,..., $S_n$ à partir d'un unique détecteur quasi-statique par rapport aux sources à localiser.

Le procédé résout le triangle première source - deuxième source - détecteur uniquement par mesures de direction d'arrivée et de la différence de temps d'arrivée (TDOA) en partant du principe que les plates-formes portant les sources sont des réflecteurs notoires et, à ce titre, que source d'émission et point de réflexion sont confondus pour une même plate-forme. Cette hypothèse est réaliste et permet une résolution simple du triangle première source - deuxième source - détecteur sans faire appel au DTPLA long et délicat à mettre en œuvre. Un tel procédé est donc de mise en œuvre rapide tout en permettant une localisation précise des sources.

De plus, le procédé s'appuie sur des mesures classiquement réalisées, notamment la direction d'arrivée des impulsions, la date d'arrivée des impulsions, la largeur des impulsions ou encore la fréquence porteuse des impulsions, ce qui est un atout pour faciliter l'intégration du procédé à un détecteur de radars.

En outre, le procédé est généralisable à N sources sur N plates-formes porteuses, par exemple, par une décomposition en une combinaison de deux parmi N triangles sur lesquels le même procédé de localisation est appliqué.

En complément facultatif, lorsque plusieurs sources sont à localiser, une étape additionnelle consiste à minimiser une fonction de coût prenant en compte simultanément l'ensemble des variables. Une telle fonction de coût permet d'améliorer la précision des distances d et directions $\Theta$ déterminées pour chaque source $S_1$,..., $S_n$.

## Revendications

**1.** Procédé de localisation d'au moins deux sources ($S_1$,..., $S_n$) d'émission d'impulsions électromagnétiques, chaque source ($S_1$,..., $S_n$) appartenant à une plate-forme porteuse ($P_1$,..., $P_n$), le procédé comprenant les étapes de :

- réception, par un détecteur (R), pour chaque source ($S_1$,..., $S_n$) à localiser, pendant une durée de fonctionnement du détecteur (R), d'au moins une même impulsion émise, reçue d'une part en direct et reçue d'autre part par réflexion sur la plate-forme porteuse d'une autre source ($S_1$:..., $S_n$),
- mesure de la direction d'arrivée ($\theta_1$,..., $\theta_n$), de la date d'arrivée ($t_1$,..., $t_n$) et d'au moins une caractéristique invariante ($C_1$,..., $C_n$) de chaque impulsion reçue,

**caractérisé en ce que** le procédé comprend, en outre, les étapes de :

- regroupement d'au moins une première paire d'impulsions de caractéristiques invariantes égales à une première caractéristique invariante ($C_1$), de directions d'arrivée ($\theta_1$, $\theta_2$) différentes, et d'au moins une deuxième paire d'impulsions de caractéristiques invariantes égales à une deuxième caractéristique invariante ($C_2$) et de mêmes directions d'arrivée ($\theta_1$, $\theta_2$) différentes,
- calcul de la différence de dates d'arrivée entre les impulsions de chaque paire,
- détermination de la direction ($\Theta$) et de la distance (d) de chaque source ($S_1$,..., $S_n$) au détecteur (R) à partir des différences de dates d'arrivée calculées et des directions d'arrivée ($\theta_1$, $\theta_2$) des impulsions de chaque paire.

2. Procédé selon la revendication 1, dans lequel la durée de fonctionnement est formée de tranches de temps ($\Delta t_1$,..., $\Delta t_k$) de durées identiques, le procédé comprenant la définition d'une durée glissante ($T_G$) au moins égale à la durée d'une tranche de temps ($\Delta t_1$,..., $\Delta t_k$), l'étape de regroupement étant mise en œuvre sur la durée glissante ($T_G$), les impulsions de chaque paire appartenant à la même tranche de temps.

3. Procédé selon la revendication 2, dans lequel le procédé comprend, en outre, pour chaque tranche de temps ($\Delta t_1$,..., $\Delta t_k$), une étape de tri des impulsions reçues en fonction de la direction d'arrivée ($\theta_1$,..., $\theta_n$) et d'au moins une caractéristique invariante ($C_1$,..., $C_n$) choisie parmi la ou les caractéristiques mesurées de chaque impulsion, pour obtenir des ensembles (E) d'impulsions, les impulsions de chaque ensemble (E) ayant des directions d'arrivée ($\theta_1$,..., $\theta_n$) égales et des caractéristiques invariantes ($C_1$,..., $C_n$) égales, les impulsions de chaque ensemble (E) étant regroupées dans une même paire lors de l'étape de regroupement.

4. Procédé selon l'une quelconque des revendications 1 à 3, dans lequel l'étape de détermination comprend le calcul d'un histogramme, pour chaque paire, à partir des différences de dates d'arrivée calculées pour ladite paire et la détermination d'un retard principal ($\tau_P$) à partir de l'histogramme calculé, la direction ($\Theta$) et la distance (d) de chaque source ($S_1$,..., $S_n$) au détecteur (R) étant calculées à partir des retards principaux ($\tau_P$) déterminés.

5. Procédé selon la revendication 4, dans lequel l'étape de détermination comprend, en outre, la comparaison de la valeur de chaque retard principal ($\tau_P$) par rapport à une plage de valeurs de référence et la comparaison du nombre d'occurrences relatif à chaque retard principal ($\tau_P$) par rapport à un seuil de référence, l'étape de détermination comprenant, également, l'élimination des retards principaux ($\tau_P$) dont la valeur n'est pas comprise dans la plage de valeurs de référence et dont le nombre d'occurrence est strictement inférieur au seuil de référence.

6. Procédé selon la revendication 4 ou 5, dans lequel chaque première paire et deuxième paire regroupées permet de déterminer les distances ($d_1$, $d_2$) respectives de deux des sources ($S_1$, $S_2$) à localiser au détecteur (R), lesdites distances ($d_1$, $d_2$) étant calculées à partir des fonctions suivantes :

$$d_1 = \frac{c}{4}\left((\tau_{P1} - \tau_{P2}) + \sqrt{(\tau_{P1} - \tau_{P2})^2 + \frac{(8\tau_{P1}\tau_{P2})}{(1-\cos(\theta_1 - \theta_2))}}\right)$$

$$d_2 = \frac{c}{4}\left(3(\tau_{P1} - \tau_{P2}) + \sqrt{(\tau_{P1} - \tau_{P2})^2 + \frac{(8\tau_{P1}\tau_{P2})}{(1-\cos(\theta_1 - \theta_2))}}\right)$$

Où

- $d_1$ est la distance de la première source $S_1$ au détecteur R,
- $d_2$ est la distance de la deuxième source $S_2$ au détecteur R,
- c est la vitesse de propagation des ondes,
- $\tau_{P1}$ est le premier retard principal relatif à la différence de trajet entre les impulsions réfléchies reçues et les impulsions directes reçues, issues des mêmes impulsions émises par la première source $S_1$,
- $\tau_{P2}$ est le deuxième retard principal relatif à la différence de trajet entre les impulsions réfléchies reçues et les impulsions directes reçues, issues des mêmes impulsions émises par la deuxième source $S_2$,
- $\theta_1$ est la direction d'arrivée des impulsions émises par la première source $S_1$, et
- $\theta_2$ est la direction d'arrivée des impulsions émises par la deuxième source $S_2$.

7. Procédé selon l'une quelconque des revendications 1 à 6, dans lequel la direction ($\Theta$) de chaque source est la direction d'arrivée ($\theta_1$, $\theta_2$) des impulsions d'un ensembles (E) d'au moins une paire en avance par rapport aux impulsions de l'autre ensemble (E) de la paire.

8. Procédé selon l'une quelconque des revendications 1 à 7, dans lequel le procédé comprend, en outre, une étape de minimisation d'une fonction de coût.

9. Procédé selon l'une quelconque des revendications 1 à 8, dans lequel les caractéristiques invariantes ($C_1,..., C_n$) de chaque impulsion comprennent au moins l'une des caractéristiques parmi : la largeur de l'impulsion, la fréquence porteuse de l'impulsion et la modulation intra-impulsion intentionnelle.

10. Détecteur (R) de localisation d'au moins deux sources ($S_1,..., S_n$) d'émission d'impulsions électromagnétiques, le détecteur (R) étant propre à mettre en œuvre les étapes du procédé selon l'une quelconque des revendications 1 à 9.

**Patentansprüche**

1. Verfahren zum Lokalisieren von mindestens zwei Quellen ($S_1,..., S_n$) zum Senden elektromagnetischer Pulse, wobei jede Quelle ($S_1,..., S_n$) zu einer tragbaren Plattform ($P_1,..., P_n$) gehört, wobei das Verfahren die folgenden Schritte aufweist:

   - Empfangen, mittels eines Detektors (R), für jede zu lokalisierende Quelle ($S_1,..., S_n$) während einer Betriebsdauer des Detektors (R) von mindestens einem gleichen gesendeten Puls, der einerseits direkt empfangen wird und andererseits mittels Reflexion an der tragbaren Plattform einer anderen Quelle ($S_1,..., S_n$) empfangen wird,
   - Messen der Ankunftsrichtung ($\theta_1,..., \theta_n$), des Ankunftszeitpunkts ($t_1,..., t_n$) und mindestens eines invarianten Charakteristikums ($C_1,..., C_n$) von jedem empfangenen Puls,

   **dadurch gekennzeichnet, dass** das Verfahren ferner die folgenden Schritte aufweist:

   - Regruppieren von mindestens einem ersten Paar an Pulsen mit invarianten Charakteristika, die gleich einem ersten invarianten Charakteristikum ($C_1$) sind, und mit unterschiedlichen Ankunftsrichtungen ($\theta_1, \theta_2$) und von mindestens einem zweiten Paar an Pulsen mit invarianten Charakteristika, die gleich einem zweiten invarianten Charakteristikum ($C_2$) sind, und mit gleichen unterschiedlichen Ankunftsrichtungen ($\theta_1, \theta_2$),
   - Berechnen des Unterschieds der Ankunftszeitpunkte zwischen den Pulsen von jedem Paar,
   - Ermitteln der Richtung ($\theta$) und des Abstandes (d) von jeder Quelle ($S_1,..., S_n$) zum Detektor (R) ausgehend von den berechneten Unterschieden der Ankunftszeitpunkte und den Ankunftsrichtungen ($\theta_1, \theta_2$) der Pulse von jedem Paar.

2. Verfahren gemäß Anspruch 1, wobei die Betriebsdauer aus Zeitrahmen ($\Delta t_1,..., \Delta t_k$) mit identischer Dauer gebildet wird, wobei das Verfahren das Definieren einer gleitenden Dauer ($T_G$) aufweist, die mindestens gleich der Dauer eines Zeitrahmens ($\Delta t_1,..., \Delta t_k$) ist, wobei der Schritt des Regruppierens über der gleitenden Dauer ($T_G$) durchgeführt wird, wobei die Pulse von jedem Paar zu dem gleichen Zeitrahmen gehören.

3. Verfahren gemäß Anspruch 2, wobei das Verfahren ferner aufweist für jeden Zeitrahmen ($\Delta t_1,..., \Delta t_k$) einen Schritt des Aussortierens von empfangenen Pulsen in Abhängigkeit von der Ankunftsrichtung ($\theta_1,..., \theta_n$) und von mindestens einem invarianten Charakteristikum ($C_1,..., C_n$), welches ausgewählt ist aus dem oder den gemessenen Charakteristika von jedem Puls, um Gruppen (E) von Pulsen zu erlangen, wobei die Pulse von jeder Gruppe (E) gleiche Ankunftsrichtungen ($\theta_1,..., \theta_n$) und gleiche invariante Charakteristika ($C_1,..., C_n$) haben, wobei die Pulse von jeder Gruppe (E) in ein gleiches Paar regruppiert werden, während des Schrittes des Regruppierens.

4. Verfahren gemäß irgendeinem der Ansprüche 1 bis 3, wobei der Schritt des Ermittelns aufweist das Berechnen eines Histogramms für jedes Paar ausgehend von den berechneten Differenzen der Ankunftszeitpunkte für das besagte Paar und das Ermitteln einer Hauptverzögerung ($\tau_P$) ausgehend von dem berechneten Histogramm, wobei die Richtung ($\theta$) und der Abstand (d) jeder Quelle ($S_1,..., S_n$) vom Detektor (R) berechnet werden ausgehend von den ermittelten Hauptverzögerungen ($\tau_P$).

5. Verfahren gemäß Anspruch 4, wobei der Schritt des Ermittelns ferner aufweist das Vergleichen des Wertes von jeder Hauptverzögerung ($\tau_P$) mit Bezug auf einen Bereich an Referenzwerten und das Vergleichen der Anzahl des Auftretens bezogen auf jede Hauptverzögerung ($\tau_P$) mit Bezug auf eine Referenzschwelle, wobei der Schritt des Ermittelns ebenfalls aufweist das Eliminieren der Hauptverzögerungen ($\tau_P$), von denen der Wert nicht in dem Bereich an Referenzwerten enthalten ist und von denen die Anzahl des Auftretens streng kleiner ist als die Referenzschwelle.

6. Verfahren gemäß Anspruch 4 oder 5, wobei jedes regruppierte erste Paar und zweite Paar es erlaubt, die jeweiligen Abstände (di, $d_2$) von zwei zu lokalisierenden Quellen ($S_1$, $S_2$) zum Detektor (R) zu ermitteln, wobei die besagten Abstände (di, $d_2$) berechnet werden ausgehend von den folgenden Funktionen:

$$d_1 = \frac{c}{4}\left((\tau_{P1} - \tau_{P2}) + \sqrt{(\tau_{P1} - \tau_{P2})^2 + \frac{(8\tau_{P1}\tau_{P2})}{(1 - \cos(\theta_1 - \theta_2))}}\right)$$

$$d_2 = \frac{c}{4}\left(3(\tau_{P1} - \tau_{P2}) + \sqrt{(\tau_{P1} - \tau_{P2})^2 + \frac{(8\tau_{P1}\tau_{P2})}{(1 - \cos(\theta_1 - \theta_2))}}\right)$$

wobei

- $d_1$ der Abstand der ersten Quelle $S_1$ zum Detektor R ist,
- $d_2$ der Abstand der zweiten Quelle $S_2$ zum Detektor R ist,
- c die Wellenausbreitungsgeschwindigkeit ist,
- $\tau_{P1}$ die erste Hauptverzögerung bezogen auf die Wegdifferenz zwischen den empfangenen reflektierten Pulsen und den empfangenen direkten Pulsen ist, die aus gleichen Pulsen stammen, die mittels der ersten Quelle $S_1$ gesendet werden,
- $\tau_{P2}$ die zweite Hauptverzögerung bezogen auf die Wegdifferenz zwischen den empfangenen reflektierten Pulsen und den empfangenen direkten Pulsen ist, die aus gleichen Pulsen stammen, die mittels der zweiten Quelle $S_2$ gesendet werden,
- $\theta_1$ die Ankunftsrichtung der Pulse ist, die mittels der ersten Quelle $S_1$ gesendet werden, und
- $\theta_2$ die Ankunftsrichtung der Pulse ist, die mittels der zweiten Quelle $S_2$ gesendet werden.

7. Verfahren gemäß irgendeinem der Ansprüche 1 bis 6, wobei die Richtung ($\theta$) jeder Quelle die Ankunftsrichtung ($\theta_1$, $\theta_2$) von den Pulsen von einer Gruppe (E) von mindestens einem Paar ist, die bezüglich der Pulse von der anderen Gruppe von dem Paar voraus sind.

8. Verfahren gemäß irgendeinem der Ansprüche 1 bis 7, wobei das Verfahren ferner einen Schritt des Minimierens einer Kostenfunktion aufweist.

9. Verfahren gemäß irgendeinem der Ansprüche 1 bis 8, wobei die invarianten Charakteristika ($C_1$,..., $C_n$) von jedem Puls aufweisen mindestens eines der Charakteristika von: der Pulsgröße, der Trägerfrequenz des Pulses und der intentionellen Intra-Puls-Modulation.

10. Detektor (R) zum Lokalisieren von mindestens zwei Quellen ($S_1$,..., $S_n$) zum Senden elektromagnetischer Pulse, wobei der Detektor (R) imstande ist, um die Schritte des Verfahrens gemäß irgendeinem der Ansprüche 1 bis 9 durchzuführen.

**Claims**

1. A method for locating at least two sources ($S_1$,..., $S_n$) emitting electromagnetic pulses, each source ($S_1$,..., $S_n$) belonging to a carrier platform ($P_1$,..., $P_n$), the method comprising the following steps:

   - receiving, by a detector (R), for each source ($S_1$,..., $S_n$) to be located, during an operating duration of the detector (R), of at least one same emitted pulse, received on the one hand directly and received on the other hand by reflection on the carrier platform of another source ($S_1$,..., $S_n$),
   - measuring the arrival direction ($\theta_1$,..., $\theta_n$), the arrival date ($t_1$,..., $t_n$) and at least one invariant characteristic ($C_1$,..., $C_n$) of each received pulse,

   **characterized in that** the method further comprises the following steps:

- grouping together at least a first pair of pulses of invariant characteristics equal to a first invariant characteristic ($C_1$) and of different directions of arrival ($\theta_1$, $\theta_2$), and at least one second pair of pulses of invariant characteristics equal to a second invariant characteristic ($C_2$) and of same different directions of arrival ($\theta_1$, $\theta_2$),
- calculating the difference of dates of arrival between the pulses of each pair,
- determining the direction ($\Theta$) and the distance (d) of each source ($S_1$,..., $S_n$) from the detector (R) based on the calculated differences of dates of arrival ($\theta_1$, $\theta_2$) of the pulses of each pair.

2. The method according to claim 1, wherein the operating duration is made up of time brackets ($\Delta t_1$,..., $\Delta t_k$) with identical durations, the method comprising defining a sliding duration ($T_G$) at least equal to the duration of a time bracket ($\Delta t_1$,..., $\Delta t_k$), the grouping step being carried out over a sliding duration ($T_G$), the pulses of each pair belonging to the same time bracket.

3. The method according to claim 2, wherein the method further comprises, for each time bracket ($\Delta t_1$,..., $\Delta t_k$), a step for sorting the received pulses based on the direction of arrival ($\theta_1$,..., $\theta_n$) and on at least one invariant characteristic ($C_1$,..., $C_n$) chosen from among the measured characteristic(s) of each pulse, to obtain sets (E) of pulses, the pulses of each set (E) having equal directions of arrival ($\theta_1$,..., $\theta_n$) and equal invariant characteristics ($C_1$,..., $C_n$), the pulses of each set (E) being grouped together in a same pair during the grouping step.

4. The method according to any one of claims 1 to 3, wherein the determination step comprises calculating a histogram, for each pair, based on the differences of dates of arrival calculated for said pair, and determining a main lag ($\tau_P$) based on the calculated histogram, the direction ($\Theta$) and the distance (d) of each source ($S_1$,..., $S_n$) from the detector (R) being calculated based on the determined main lags ($\tau_P$).

5. The method according to claim 4, wherein the determination step further comprises comparing the value of each main lag ($\tau_P$) relative to a range of reference values and comparing the number of occurrences relative to each main lag ($\tau_P$) with respect to a reference threshold, the determination step also comprising eliminating main lags ($\tau_P$) whose value is not comprised in the reference value range and for which the number of occurrences is strictly below the reference threshold.

6. The method according to claim 4 or 5, wherein each grouped first pair and second pair makes it possible to determine the respective distances (di, $d_2$) of two of the sources ($S_1$, $S_2$) to be located from the detector (R), said distances (di, $d_2$) being calculated from the following functions:

$$d_1 = \frac{c}{4}\left((\tau_{P1} - \tau_{P2}) + \sqrt{(\tau_{P1} - \tau_{P2})^2 + \frac{(8\tau_{P1}\tau_{P2})}{(1-\cos(\theta_1-\theta_2))}}\right)$$

$$d_2 = \frac{c}{4}\left(3(\tau_{P1} - \tau_{P2}) + \sqrt{(\tau_{P1} - \tau_{P2})^2 + \frac{(8\tau_{P1}\tau_{P2})}{(1-\cos(\theta_1-\theta_2))}}\right)$$

Where

- $d_1$ is the distance of the first source $S_1$ from the detector R,
- $d_2$ is the distance of the second source $S_2$ from the detector R,
- c is the propagation speed of the waves,
- $T_{P1}$ is the first main lag relative to the path difference between the received reflected pulses and the received direct pulses, derived from the same pulses emitted by the first source $S_1$,
- $\tau_{P2}$ is the second main lag relative to the path difference between the received reflected pulses and the received direct pulses, derived from the same pulses emitted by the second source $S_2$,
- $\theta_1$ is the direction of arrival of the pulses emitted by the first source $S_1$, and
- $\theta_2$ is the direction of arrival of the pulses emitted by the second source $S_2$.

7. The method according to any one of claims 1 to 6, wherein the direction ($\Theta$) of each source is the direction of arrival ($\theta_1$, $\theta_2$) of the pulses of a set (E) of at least one pair in advance relative to the pulses of the other set (E) of the pair.

8. The method according to any one of claims 1 to 7, wherein the method further comprises a step for minimizing a cost function.

9. The method according to any one of claims 1 to 8, wherein the invariant characteristics $(C_1,..., C_n)$ of each pulse comprise at least one of the features from among: the width of the pulse, the carrier frequency of the pulse and the intentional intra-pulse modulation.

10. A detector (R) for locating at least two electromagnetic pulse emission sources $(S_1,..., S_n)$, the detector (R) being able to carry out the steps of the method according to any one of claims 1 to 9.

$S_1, P_1$

$S_2, P_2$

$\Theta_1$ $\Theta_2$

R

## FIG.1

| 12 | 14 | R

## FIG.2

---

100 — Réception des impulsions

110 — Caractérisation des impulsions

120 — Découpage en sous-périodes de temps

130 — Tri des impulsions

140 — Regroupement des impulsions par paquets

150 — Calcul de différences de dates d'arrivée

160 — Détermination de la distance et de la direction de chaque source

## FIG.3

## RÉFÉRENCES CITÉES DANS LA DESCRIPTION

### Documents brevets cités dans la description

- US 20110140966 A
- EP 2428810 A
- WO 2014001651 A